# EUROPÄISCHE PATENTSCHRIFT

(11) **EP 2 884 245 B1**
(45) Veröffentlichungstag und Bekanntmachung des Hinweises auf die Patenterteilung: **25.04.2018**
(21) Anmeldenummer: 13197494.1
(22) Anmeldetag: 16.12.2013
(51) Int. Cl.: H01P 11/00, G01F 23/288, G01F 23/292, G01F 23/284

(54) **Gewichtsvorrichtung für einen Wellenleiter und Verfahren zum Herstellen einer Gewichtsvorrichtung**
Weight apparatus for a waveguide and method for producing a weight apparatus
Dispositif de poids pour un guide d'ondes et procédé de fabrication d'un dispositif de poids

(43) Veröffentlichungstag der Anmeldung: 17.06.2015
(73) Patentinhaber: VEGA Grieshaber KG, 77709 Wolfach (DE)
(72) Erfinder: Hoferer, Christian, 77654 Offenburg (DE); Griessbaum, Karl, 77796 Mühlenbach (DE); Haas, Jürgen, 77709 Oberwolfach (DE)
(74) Vertreter: Maiwald Patentanwalts GmbH

(56) Entgegenhaltungen:
- WO-A1-03/016835
- DE-B3-102004 035 757
- US-A- 5 661 251
- US-B1- 7 367 231
- Pepperl: "Austausch einer Seilsonde oder Stabsonde am Pulscon LTC", , 13 September 2002 (2002-09-13), pages 1-2, XP055300092, Retrieved from the Internet: URL:http://files.pepperl-fuchs.com/selecto r_files/navi/productInfo/doct/doct0567.pdf [retrieved on 2016-09-06]

## Beschreibung

### Technisches Gebiet

Die vorliegende Erfindung betrifft das technische Gebiet der Messtechnik. Insbesondere betrifft die vorliegende Erfindung eine Gewichtsvorrichtung, ein Verfahren zum Herstellen einer Gewichtsvorrichtung und ein Füllstandmessgerät.

### Hintergrund der Erfindung

Füllstände können durch Auswertungen von Reflexionen oder Echos von geführten Mikrowellen oder geführten Radarwellen gemessen werden. Dazu breiten sich Wellen oder Signale entlang einer Sonde innerhalb eines Behälters aus und werden reflektiert, wenn sie in Kontakt mit einem Füllgut oder mit Luft kommen. Diese Reflexionen lassen sich als Echos in einem Echodiagramm kenntlich machen. Durch das Vermessen der bei dieser Messung gewonnenen Zeitabstände der Echos kann auf den Füllstand innerhalb des Behälters zurückgeschlossen werden, insbesondere kann ermittelt werden, ob der Behälter leer, d.h. lediglich mit Luft gefüllt ist. Meist wird eine Füllstandmessung durchgeführt, wenn die Sonde das Medium berührt oder in das Medium eingetaucht ist. Die bei einer Füllstandmessung mittels geführter Mikrowelle eingesetzten Wellenleiter sind im Wesentlichen Seile, die ein Teil einer Seilsonde sind. Eine Seilsonde weist an ihrem Ende ein Straffgewicht auf, um eine möglichst stabile Lage der Seilsonde innerhalb des Behälters zu gewährleisten.

Die zur Straffung eingesetzten Straffgewichte können jedoch selbst die Messergebnisse beeinflussen. Oftmals sind sie als massive und im Wesentlichen zylindrisch geformte Gewichte ausgebildet. Im Wesentlichen werden die Gewichte im Hinblick auf eine hohe Masse gefertigt, weshalb sie oftmals einen großen Durchmesser gegenüber dem Wellenleiters aufweisen.

Die Druckschrift DE 10 2004 035 757 B3 beschreibt eine Anordnung zur Bestimmung der Höhe eines Flüssigkeitsstandes.

Die Druckschrift US 7,367,231 B1 betrifft eine Sonde für ein flexibles Füllstandmessgerät basierend auf einer geführten Welle.

Die Druckschrift US 5,661,251 beschreibt eine Sensorvorrichtung für Prozessmessungen.

Die WO 03/016835 A1 zeigt ein Verfahren zur Auswertung von Messsignalen eines nach dem Laufzeitprinzip arbeitenden Messgeräts. Insbesondere zeigt die Fig. 7 der WO 03/016835 A1 ein Füllstandsmessgerät mit einem Wellenleiter und einer zusätzlichen Reflektionsstelle auf dem Wellenleiter. An dem Wellenleiter ist an dessen Ende ein Endwicht befestigt.

### Zusammenfassung der vorliegenden Erfindung

Es besteht ein Bedarf, ein gutes Messen von Füllständen zu ermöglichen.

Dementsprechend wird eine Gewichtsvorrichtung für einen Wellenleiter, ein Verfahren zum Herstellen einer Gewichtsvorrichtung und ein Füllstandmessgerät beschrieben. Der Gegenstand der Erfindung ergibt sich aus den Merkmalen der unabhängigen Patentansprüche. Spezifische Ausführungsbeispiele sind in den abhängigen Patentansprüchen angegeben.

Gemäß einem Aspekt der vorliegenden Erfindung wird eine Gewichtsvorrichtung mit einem Wellenleiter in Form eines Seils geschaffen, wobei der Wellenleiter einen Wellenwiderstand aufweist. Der Wellenwiderstand des Wellenleiters mag in einem Beispiel durch seine Geometrie und Materialeigenschaft bestimmt werden. Dieser Wellenwiderstand mag die Bauform und/oder das Material einer Gewichtsvorrichtung bestimmen, die zum Verbinden mit diesem Wellenleiter geschaffen wird, um den Wellenleiter zu straffen.

Die Gewichtsvorrichtung weist einen Gewichtskörper auf, an dem eine Befestigungseinrichtung vorgesehen ist. Die Befestigungseinrichtung ist zum Befestigen des Gewichtskörpers an dem Wellenleiter eingerichtet. Mittels der Befestigungseinrichtung ist die Gewichtsvorrichtung mit dem Wellenleiter verbindbar. Die Befestigungseinrichtung ist ferner so eingerichtet, dass sie einen Wellenwiderstand aufweist, der im Wesentlichen an den Wellenwiderstand des Wellenleiters angepasst ist, an dem die Gewichtsvorrichtung befestigt werden soll.

Die Befestigungseinrichtung ist dabei ein Übergangsbereich, in dem ein Übergang von dem Wellenleiter zu der Gewichtsvorrichtung stattfindet, wobei die Befestigungseinrichtung so beschaffen ist, dass sie in einem befestigten Zustand ein Ende des Seils sicher fixiert, jedoch nur geringe Reflektionen verursacht. Ferner weist der Gewichtskörper eine Form auf, die aus der Gruppe von Formen ausgewählt ist, bestehend aus einer Kegelstumpfform und einer Trompetenform. Der Wellenwiderstand der Befestigungseinrichtung oder der Wellenwiderstand an einem Ende der Gewichtsvorrichtung mag in einem Bespiel durch die Form der Befestigungseinrichtung oder durch die Form des Gewichtskörpers an den Wellenwiderstand des Wellenleiters angepasst sein, an dem die Gewichtsvorrichtung angebracht werden soll oder angebracht ist. Insbesondere ist der Wellenwiderstand der Befestigungseinrichtung so eingerichtet, dass wenn die Gewichtsvorrichtung mit dem Wellenleiter verbunden ist, Reflexionen minimiert werden, die durch die Befestigungseinrichtung hervorgerufen werden. Als Befestigungseinrichtung mag allgemein ein Übergangsbereich bezeichnet werden, in dem der Übergang von dem Wellenleiter zu der Gewichtsvorrichtung stattfindet. In einem Beispiel mag der Wellenleiter ein Seil, insbesondere ein Seil aus einem elektrisch leitfähigen Material sein. In einem anderen Beispiel mögen der Wellenleiter sowie der Gewichtskörper aus einem Material beschaffen sein, welches für das Leiten von thermischen oder akustischen Wellen geeignet sein mag. Insbesondere, wenn eine Sondenvorrichtung aus einem einzigen monolithischen Stück hergestellt wird, mag der Befestigungsbereich ein Übergangsbereich sein, in dem im Wesentlichen eine Formänderung von dem Wellenleiter zu dem Gewichtskörper stattfindet. Bei einer Seilsonde mag sich eine Welle im Wesentlichen zwischen dem Wellenleiter und einer Behälterwand ausbilden und ausbreiten. Ein Wellenwiderstand mag sich in einem Beispiel aus der Geometrie des Wellenleiters und der Behälterwand bestimmen lassen. Der Wellenleiter und/oder der Gewichtskörper können als Innenleiter und die Behälterwand als Außenleiter einer im Wesentlichen koaxialen Leitung verstanden werden.

Allgemein mag der Wellenwiderstand der Befestigungseinrichtung den Wellenwiderstand an einem ersten Ende des Gewichtskörpers bestimmen, wenn die Befestigungseinrichtung an dem ersten Ende angeordnet ist. Die Befestigungseinrichtung mag in einem Beispiel im Wesentlichen eine Öffnung mit einer dünnen Wandung an dem ersten Ende des Befestigungskörpers sein. In die Öffnung kann der Wellenleiter einführbar sein, um eine Kopplung des Wellenleiters und des Gewichtkörpers herbeizuführen.

In einem anderen Beispiel mag die Gewichtsvorrichtung aus im Wesentlichen dem gleichen Material wie der Wellenleiter ausgebildet sein. Bei dem Wellenleiter mag es sich um ein Seil handeln, welches eine elektromagnetische Welle oder eine akustische Welle führt.

In anderen Worten mag die Gewichtsvorrichtung so beschaffen sein, dass sich mittels der Gewichtsvorrichtung oder mittels eines Straffgewichts eine Impedanzanpassung an den Wellenleiter oder an die Wellenführeinrichtung erreichen lässt, mit der die Gewichtsvorrichtung verbunden werden soll.

Gemäß einem anderen Aspekt der vorliegenden Erfindung wird eine Sondenvorrichtung beschrieben, welche die erfindungsgemäße Gewichtsvorrichtung und den Wellenleiter, nämlich das Seil, aufweist. Der Wellenleiter, die Wellenführeinrichtung oder das Seil sind zum Führen der Welle eingerichtet, welche in das Seil eingeprägt wird. Die Gewichtsvorrichtung ist mittels der Befestigungseinrichtung mit dem Seil verbunden.

Gemäß noch einem anderen Aspekt der vorliegenden Erfindung wird eine Sondenvorrichtung beschrieben, welche eine Wellenführeinrichtung aufweist. Die Wellenführeinrichtung mag einstückig oder monolithisch aufgebaut sein und im Wesentlichen zwei Bereiche aufweisen, wobei der erste Bereich seilförmig mit einem ersten Durchmesser ausgebildet ist und der zweite Bereich als Gewichtskörper mit einem zweiten Durchmesser ausgebildet ist. Der erste Durchmesser mag in einer Ausbreitungsrichtung einer Welle entlang der Wellenführeinrichtung im Wesentlichen konstant sein. Der zweite Durchmesser mag in dieser Ausbreitungsrichtung der Welle im Wesentlichen zunehmen. Als Ausbreitungsrichtung mag eine Richtung von einem Sender in Richtung des Gewichtskörpers verstanden werden. Der Sender mag beispielsweise ein TDR (Time Device Reflectometer) Sensor sein. Der TDR Sensor mag eingerichtet sein, eine Mikrowelle oder ein Radarsignal zu generieren und dieses in die Wellenführeinrichtung und/oder das Seil einzuprägen. Der TDR Sensor mag auch in der Lage sein, aus den gemessenen Laufzeiten bis zum Empfang reflektierter Signale ein Echodiagramm zu generieren.

Gemäß einem anderen Aspekt der vorliegenden Erfindung wird ein Verfahren zum Herstellen der erfindungsgemäßen Gewichtsvorrichtung angegeben. Das Verfahren weist das Verbinden der Gewichtsvorrichtung mit dem Wellenleiter in Form des Seils mittels der Befestigungseinrichtung auf. Ferner weist das Verfahren das Einprägen einer Welle in den Wellenleiter in Form des Seils auf. In einem Beispiel weist das Verfahren, das Einprägen einer elektromagnetischen Welle, einer Mikrowelle oder einer Radarwelle auf.

Ferner weist das Verfahren das Messen einer Reflexion auf, welche durch die Befestigungseinrichtung der Gewichtsvorrichtung verursacht wird. Dazu wird beispielsweise in einem leeren Behälter eine Messung durchgeführt und die von der Befestigungseinrichtung oder von dem Übergangsbereich herrührende Reflexion ermittelt. Das Verfahren weist ferner das Verändern der Form der Gewichtsvorrichtung auf, wobei während des Veränderns der Form das Minimieren der Reflexion angestrebt wird. Zum Minimieren der Reflexion wird die Form der Gewichtsvorrichtung, insbesondere die Form des Gewichtskörpers solange verändert, bis die einer Befestigungseinrichtung oder einem Übergangsbereich zugeordnete Reflexion einen minimalen Wert hat oder unter einen vorgebbaren Schwellwert abgesunken ist. Mittels dieses Verfahrens mag eine Gewichtsvorrichtung herstellbar sein, die im Wesentlichen so an die Wellenführeinrichtung oder das Seil angepasst ist, dass wenn die Wellenführeinrichtung oder der Wellenleiter mit der Gewichtsvorrichtung verbunden ist Reflexionen, welche durch den Übergang des Seilendes auf die Gewichtsvorrichtung reflektiert werden, minimal sind.

Eine Sondenvorrichtung mit einer nach dem Herstellverfahren hergestellten Gewichtsvorrichtung kann beispielsweise anhand eines Echodiagramms erkannt werden, in welchem der Wert für gewünschte Echos, beispielsweise der Wert für eine Reflexion an einem Füllgut größer ist, als der Wert für eine Reflexion, die von der Befestigungseinrichtung verursacht wird.

In einem zusätzlichen Schritt mag auch die Herstellung einer Sondenvorrichtung vorgesehen sein, die integral die Wellenführeinrichtung und die Gewichtsvorrichtung beinhaltet, so dass die Wellenführeinrichtung im Wesentlichen zwei unterscheidbare Bereiche aufweist.

Gemäß einem anderen Aspekt der vorliegenden Erfindung wird ein Füllstandmessgerät mit einer erfindungsgemäßen Gewichtsvorrichtung oder mit einer erfindungsgemäßen Sondenvorrichtung beschrieben. Das Füllstandmessgerät kann einen Füllstand eines Fluids, oder eines Schüttguts messen. Das Füllstandmessgerät kann aber auch für eine Grenzstandmessung eingesetzt werden.

Bei der Ausbreitung von Wellen, insbesondere bei der Ausbreitung von elektromagnetischen Wellen, wie beispielsweise Mikrowellen oder Radarwellen, mag es an Unstetigkeitsstellen zu unterschiedlich stark ausgeprägten Reflexionen kommen. Je stärker der Unterschied der Geometrie entlang einer kurzen Strecke in einer Ausbreitungsrichtung von einer Welle oder von einem Signal sein mag, umso stärker mögen Reflexionen angeregt werden. Diese Reflexionen können bei einer Signalauswertung störend sein, da gewünschte oder gezielt herbeigeführte Reflexionen durch die unerwünschten Reflexionen verdeckt werden können. Die Verdeckung kann dazu führen, dass die gesuchten Reflexionen zum Bestimmen eines Füllstandes oder eines Sondenendes nicht eindeutig identifizierbar sind. Daher sollten bei einer Wellenführung möglichst stetige Übergänge oder homogene Übergänge hergestellt werden und sprunghafte Veränderungen der Geometrien vermieden werden. Ein homogener Übergang mag eine stetige Verbreiterung eines Radius in einer Signalausbreitungsrichtung sein.

Bei einer Seilsonde, wie sie im Wesentlichen bei Füllstandmessgeräten eingesetzt wird, die sich des physikalischen Prinzips der geführten Mikrowelle oder im Allgemeinen des physikalischen Prinzips einer geführten Welle bedient, mag es wünschenswert sein, ein besonders schweres Straffgewicht einzusetzen. Als geführte Welle kann eine elektromagnetische Welle, eine akustische Welle oder eine thermische Welle genutzt werden. Die Welle kann auch ein moduliertes Signal sein und lediglich eine begrenzte Zeitdauer aufweisen. Ein Signal begrenzter Zeitdauer ist ein Impuls. Um ein hohes Gewicht zu erreichen, das nicht unangemessen lang ist, mag ein Gewicht, eine Gewichtsvorrichtung oder ein Straffgewicht mit einem großen Volumen und mit hoher Dichte eingesetzt werden. Trotzdem mag es die Bauform für den Einbau in einen Container notwendig machen, dass für dieses Straffgewicht ein Körper mit einem großen Radius senkrecht zu einer Ausbreitungsrichtung der Welle eingesetzt werden muss. Bei solch einer Gewichtseinrichtung mag eine plötzliche Sprungstelle bei dem Übergang von der Wellenführeinrichtung oder dem Wellenleiter zu dem Straffgewicht entstehen. Diese Sprungstelle mag starke Reflexionen verursachen.

In einem Beispiel mag eine Befestigungseinrichtung eines Straffgewichts oder einer Gewichtsvorrichtung, insbesondere eine Anschlussstelle eines Straffgewichts, an einen Wellenleiter so an den Wellenleiter angepasst sein, dass im Wesentlichen keine Reflexion durch diese Befestigungseinrichtung hervorgerufen wird. Beispielsweise mag eine Anpassung erreichbar sein, indem ein Wellenwiderstand der Befestigungseinrichtung der Gewichtsvorrichtung an den Wellenwiderstand des Wellenleiters angepasst ist. An diese Impedanz oder an diesen Wellenwiderstand kann der Wellenwiderstand der Befestigungseinrichtung angepasst werden. Die für Seilsonden eingesetzte Wellenleiter oder Seile haben normierte Maße. Es lassen sich entsprechende Gewichtsvorrichtungen bereitstellen, die für die normierten Masse der Wellenleiter oder Wellenführeinrichtungen angepasst sind.

Gemäß einem Aspekt der vorliegenden Erfindung mag die Befestigungseinrichtung an einem ersten Ende der Gewichtsvorrichtung angeordnet sein. Dieser Befestigungseinrichtung mag ein zweites Ende der Gewichtsvorrichtung gegenüberliegen. Das zweite Ende mag gegenüber dem ersten Ende einen Wellenwiderstand aufweisen, der kleiner als der Wellenwiderstand der Befestigungseinrichtung oder kleiner als der Wellenwiderstand des ersten Endes ist. Allgemein mag das zweite Ende einen Wellenwiderstand aufweisen, der sich von dem Wellenwiderstand der Befestigungseinrichtung unterscheidet. In einem anderen Beispiel mag das zweite Ende einen Wellenwiderstand aufweisen, der größer als der Wellenwiderstand des ersten Endes ist. Der Unterschied der Wellenwiderstände der beiden Enden mag von dem Versuch herrühren, den Wellenwiderstand am ersten Ende im Wesentlichen an den Wellenleiter anzupassen, jedoch den Wellenwiderstand am zweiten Ende im Wesentlichen nicht an das umgebende Material anzupassen. Der Wellenwiderstand am zweiten Ende mag so gewählt werden, dass das zweite Ende "verstimmt" ist, also nicht angepasst ist. Insbesondere mag der Übergang von dem ersten Ende zu dem Gewichtskörper weniger sprungförmig sein als der Übergang des zweiten Endes zu dem Umgebungsmaterials des Füllgutes oder zu der umgebenden Luft. Der Übergang von dem ersten Ende zu dem Gewichtskörper mag im Wesentlichen der Übergangsbereich von dem Wellenwiderstand des Wellenleiters zu dem Wellenwiderstand des Gewichtskörpers sein, insbesondere der Übergang des Wellenwiderstands von einem ersten Ende zu einem Bereich des Gewichtskörpers, der zwischen dem ersten Ende und dem zweiten Ende liegt. So mag eine Gewichtsvorrichtung geschaffen werden, welche an einer Befestigungseinrichtung einen an einen Wellenleiter angepassten Wellenwiderstand aufweist, wohingegen das zweite Ende einen Übergang zu einem Material aufweist, welches im Wesentlichen schlecht angepasst ist. So mögen im Wesentlichen Reflexionen an der Befestigungseinrichtung vermieden, jedoch Reflexionen an dem zweiten Ende provoziert oder hervorgerufen werden. Die schlechte Anpassung am zweiten Ende mag im Wesentlichen dadurch verursacht werden, dass das Material des Füllgutes oder der Umgebung in welches/in welche das zweite Ende übergeht nicht bekannt ist, und damit auch sein Wellenwiderstand. Es wäre beispielsweise möglich eine Anpassung an Luft herzustellen, wenn kein Füllgut verwendet wird. Diese Anpassung könnte aber dazu führen, dass eine Erkennung des Sondenende nicht mehr möglich wäre. Es mag auch schwer vorauszusagen sein, in welchem Material eines Füllgutes die Sonde genutzt wird. Denn nicht alle Sonden hängen in Luft sondern in einem Medium, von welchem die Eigenschaften im Wesentlichen unbekannt sind. In einem Beispiel mag jedoch vorgesehen sein, dass das Material des Gewichtskörpers an das Material des zu vermessenden Füllgutes angepasst ist. Dann mag auch an dem zweiten Ende eine Anpassung existieren und das Sondenende mag dann, im Wesentlichen solange das zweite Ende in das Füllgut eingetaucht ist, im Wesentlichen keine Reflexionen verursachen. Zum Vermessen des Sondenendes müsste dann beispielsweise das Füllgut abgelassen werde, um einen Übergang zu einem anderen Material als dem Material des Füllgutes zu erzeugen, an welches andere Material das zweite Ende nicht angepasst ist.

Eine Seilsonde weist sowohl das Seil als auch die Gewichtsvorrichtung auf. Es mag möglich sein, das Ende einer Seilsonde durch eine sprunghafte Änderung des Wellenwiderstandes zu bestimmen. In anderen Worten mag es möglich sein, das Ende der Gewichtsvorrichtung durch ein Echo sichtbar zu machen, indem insbesondere im Bereich des Endes starke Reflexionen provoziert werden.

Gemäß einem anderen Aspekt der vorliegenden Erfindung ist der Gewichtskörper zumindest teilweise aus einem Material hergestellt, das auf das Material des Wellenleiters abgestimmt ist. Die Reflexion beim Übergang von dem Wellenleiter zu dem Gewichtskörper mag einerseits durch die Veränderung der Geometrie und andererseits durch Unterschiede im Material zwischen Wellenleiter und Gewichtskörper verursacht werden. Der Gewichtskörper soll jedoch so ausgebildet sein, dass Reflexionen im Wesentlichen vermieden werden und nicht eine spezielle Störstelle geschaffen wird, insbesondere am ersten Ende des Gewichtskörpers. Die Vermeidung von Reflexionen mag im Wesentlichen durch konstruktive Maßnahmen, wie das Anpassen der Form oder des Materials des Gewichtskörpers erreicht werden.

Beispielsweise mag das Material des Gewichtskörpers das selbe sein, wie das Material des Wellenleiters. Ist jedoch das Material des Wellenleiters aus einem stark reflektierenden Material hergestellt, beispielsweise aus Stahl, mag es jedoch in einem Beispiel sinnvoll sein, den Gewichtskörper aus einem anderen Material herzustellen, beispielsweise aus einem Material, welches eine elektromagnetische Welle nicht stark reflektiert, wie z.B. Keramik, Glas oder Kunststoff.
Ein gut reflektierendes Material mag beispielsweise auch ein gut leitendes Material sein. Beispielsweise mag es zu starken Reflexionen kommen, wenn das Material der Gewichtsvorrichtung das gleiche Material ist, wie das Material des Wellenleiters. Kommt dann hinzu, dass eine unstetige Übergangsstelle zwischen Gewichtsvorrichtung und Wellenleiter vorhanden ist, kommt es sehr leicht zu Reflexionen. Demgegenüber können jedoch trotz des stark reflektierenden Materials bei entsprechender Anpassung der Wellenwiderstände des Wellenleiters und des mit dem Wellenleiter verbindbaren Gewichtskörpers entsprechend gut Reflexionen verhindert werden.

In einem Beispiel mag der Gewichtskörper aus einem Material hergestellt sein, das eine von dem Wellenleiter geführte Welle reflektiert.

Gemäß noch einem anderen Aspekt der vorliegenden Erfindung ist die Befestigungseinrichtung des Gewichtskörpers mit einem Seilende verbindbar.

In einem Beispiel handelt es sich bei einer Befestigungseinrichtung um ein Sackloch, in welches ein Seilende einführbar ist. Mittels einer Befestigungsschraube, eines Presssitzes oder einer Verklebung kann das Seilende in dem Sackloch verankert werden. Durch das Verbinden des Seilendes mit der Befestigungseinrichtung mag sich eine Seilsonde schaffen lassen, welche im Wesentlichen eine Einheit zwischen Wellenleiter und Gewichtsvorrichtung herstellt. Die Befestigungseinrichtung mag so beschaffen sein, dass sie in einem befestigten Zustand das Seilende sicher fixiert, jedoch nur geringe Reflexionen verursacht. In anderen Worten mag die Befestigungseinrichtung den Gewichtskörper vor den Radarstrahlen oder den geführten Mikrowellen verstecken, so dass er im Wesentlichen im Echodiagramm nicht als Echo auffällt.

Gemäß einem anderen Aspekt der vorliegenden Erfindung weist die Befestigungseinrichtung eine Öffnung mit einer Befestigungsschraube auf.

Die Öffnung kann als durchgängige Bohrung oder als Sackloch ausgeführt sein. Mittels der Befestigungsschraube, welche senkrecht zu einer Längsachse der Öffnung oder senkrecht zu dem Sackloch angeordnet ist, mag sich der Wellenleiter in den Gewichtskörper integrieren lassen.

Gemäß noch einem anderen Aspekt der vorliegenden Erfindung handelt es sich bei dem Gewichtskörper um einen rotationssymmetrischen dreidimensionalen Körper.

Ein rotationssymmetrischer Körper mag im Wesentlichen in allen Raumrichtungen die gleichen Reflexionseigenschaften oder Anpassungseigenschaften aufweisen, so dass es im Wesentlichen in allen Richtungen zu der selben Anpassung kommt. Durch das Verwenden rotationssymmetrischer Körper mögen sich Unstetigkeitsstellen um den Wellenleiter herum vermeiden lassen.

Gemäß noch einem anderen Aspekt der vorliegenden Erfindung weist der Gewichtskörper einen Durchmesser auf, der in der Richtung vom ersten Ende zum zweiten Ende im Wesentlichen zunimmt. In anderen Worten nimmt der Durchmesser in einer Ausbreitungsrichtung der geführten Welle vor der Reflexion am zweiten Ende im Wesentlichen stetig zu. Wird die Mantelfläche des Gewichtskörpers mittels einer Funktion in Abhängigkeit von der Länge von dem ersten Ende zu dem zweiten Ende bestimmt, so weist eine erste Ableitung dieser Funktion einen positiven Wert auf.

Die stetige Zunahme des Durchmessers des Gewichtskörpers mag es ermöglichen, nahe am Ende des Wellenleiters oder am Beginn des Gewichtskörpers, d.h. im Bereich der Befestigungseinrichtung, einen stetigen Übergang zwischen dem mit der Gewichtsvorrichtung verbindbarem Wellenleiter und der Gewichtsvorrichtung zu schaffen. Die Zunahme des Radius in Richtung des zweiten Endes mag gleichzeitig zu einer Erhöhung des Gesamtgewichts der Gewichtsvorrichtung führen. Ein hohes Gewicht der Gewichtsvorrichtung mag der guten Straffung eines verbundenen Wellenleiters oder Seils dienen. Je schwerer das Gewicht ist, desto besser mag der Wellenleiter gestrafft werden und desto weniger mag der Wellenleiter vom Füllgut aus der Senkrechten gebracht werden. Die Reflexionen mögen im Wesentlichen durch eine im Wesentlichen abrupte, sprungförmige oder treppenförmige Änderung des Wellenwiderstands entlang des Ausbreitungsmediums hervorgerufen werden. Durch die stetige Erhöhung des Radius des Gewichtskörpers mag sich in Verbindung mit der Herstellung einer schlechten Anpassung zum Füllgut oder zur Luft am zweiten Ende der Wellenwiderstand erniedrigen, ausgehend von dem hohen Wellenwiderstand im Bereich der Befestigungseinrichtung. Da der Wellenwiderstand im Bereich der Befestigungseinrichtung im Wesentlichen an den Wellenwiderstand des Wellenleiters angepasst ist, mag der Wellenwiderstand am zweiten Ende auch niedriger als der Wellenwiderstand des Wellenleiters sein.

Die Erhöhung des Radius dient zusätzlich zu der Verringerung des Wellenwiderstandes am zweiten Ende auch dazu, die Anpassung des zweiten Endes des Gewichtskörpers an das umgebende Material oder die umgebende Luft zu verschlechtern, um am Sondenende eine besonders starke Reflexion hervorzurufen. Durch die kontinuierliche Vergrößerung des Radius des Gewichtskörpers mag der Wellenwiderstand am zweiten Ende kleiner als der Wellenwiderstand am ersten Ende sein. Trotzdem mag wegen der schlechten Anpassung des zweiten Endes an das umgebende Material am zweiten Ende eine starke Reflexion der sich entlang des Wellenleiters und Gewichtskörpers ausbreitenden Welle verursacht werden. Im Falle eines Leiters für eine elektromagnetische Welle mag der Grad der Anpassung des jeweiligen Endes durch eine Impedanzmessung überprüfbar sein.

Der Gewichtskörper weist eine Form auf, welche aus der Gruppe von Formen ausgewählt ist, die aus einer Kegelstumpfform und einer Trompetenform besteht.

Sämtliche dieser Formen weisen eine an den Durchmesser eines Seils angepasste erste Befestigungseinrichtung und ein breites und dadurch schweres zweites Ende auf. Die Anpassung des Durchmessers und die Anpassung der Form der Befestigungseinrichtung an den Durchmesser und die Form des zu verbindenden Wellenleiters mag nicht nur zu einer geometrischen Anpassung sondern auch zu einer signaltechnischen Anpassung führen, indem die Wellenwiderstände des Wellenleiters und der Befestigungseinrichtung aneinander angepasst sind.

Gemäß noch einem anderen Aspekt der vorliegenden Erfindung weist die Mantelfläche des Gewichtskörpers zumindest einen Schlitz auf.

Der Schlitz kann zu einer guten Anpassung des ersten Endes der Gewichtsvorrichtung an den Wellenleiter dienen. Der Schlitz mag bewirken, dass sich zu der kontinuierlichen Anpassung des Wellenwiderstands durch die kontinuierliche Formänderung des Gewichtskörpers noch zusätzlich kleine positive und negative Impedanzsprünge ergeben, welche örtlich so dicht aneinander liegen, dass sie sich gegenseitig aufheben und dadurch die Anpassung und/oder den kontinuierlichen Übergang verbessern können.

Gemäß einem anderen Aspekt der vorliegenden Erfindung ist die Sondenvorrichtung aus einem elektrisch leitfähigen Material gefertigt. In anderen Worten mag die Sondenvorrichtung einstückig oder monolithisch gefertigt sein, wodurch eine Unstetigkeit an dem Übergang zwischen Wellenleiter und Gewichtsvorrichtung minimiert wird. Im Wesentlichen mag die Sonde durch diese Maßnahme homogene Eigenschaften aufweisen. Der Gewichtskörper und der Wellenleiter mögen integral verbunden und somit ineinander integriert sein.

Gemäß noch einem anderen Aspekt der vorliegenden Erfindung weist die Sondenvorrichtung einen dielektrischen Kern auf, der beispielsweise mit leitfähigem Material umgeben ist. Durch den Aufbau mittels eines dielektrischen Kerns kann das Gesamtgewicht der Sonde verringert werden und trotzdem der Schwerpunkt in das Sondenende verlagert werden, um die Sonde zu straffen.

Die Füllstandmessung wird oftmals durchgeführt. Wenn die Sonde in das Füllgut eingetaucht ist oder es berührt. Es ergeben sich auch Veränderungen der Echos, wenn sich das Füllgut nur in der Nähe der Sonde befindet, diese Veränderungen werden jedoch noch nicht ausgewertet, um Rückschlüsse auf den Füllstand zu ziehen. Jedoch auch für solche Messungen kann die Gewichtsvorrichtung eingesetzt werden.

Es soll angemerkt werden, dass unterschiedliche Aspekte der Erfindung in Bezug auf unterschiedliche Gegenstände beschrieben wurden. Insbesondere wurden einige Aspekte in Bezug auf Vorrichtungsansprüche beschrieben, wohingegen andere Aspekte mit Bezug auf Verfahrensansprüche beschrieben wurden. Ein Fachmann kann jedoch der vorangehenden Beschreibung und der folgenden Beschreibung entnehmen, dass, außer es ist anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen bezieht. Insbesondere sollen Kombinationen zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.
Fig. 1 zeigt den bekannten Aufbau einer Sondenvorrichtung zum besseren Verständnis der vorliegenden Erfindung.
Fig. 2 zeigt ein Echodiagramm, welches mit der Sondenvorrichtung aus Fig. 1 aufgenommen wurde, zum besseren Verständnis der vorliegenden Erfindung.
Fig. 3 zeigt ein Echodiagramm, welches mit der Sondenvorrichtung aus Fig. 1 bei einer Trennschichtmessung aufgenommen wurde, zum besseren Verständnis der vorliegenden Erfindung.
Fig. 4 zeigt eine kegelstumpfförmige Gewichtsvorrichtung gemäß einem exemplarischen Ausführungsbeispiel der vorliegenden Erfindung.
Fig. 5 zeigt eine trompetenförmige Gewichtsvorrichtung gemäß einem exemplarischen Ausführungsbeispiel der vorliegenden Erfindung.
Fig. 6 zeigt eine tropfenförmige Gewichtsvorrichtung. Die Tropfenform ist nicht Teil der Erfindung.
Die Fig. 7 zeigt die kegelstumpfförmige Gewichtsvorrichtung der Fig. 4 mit einem Schlitz auf der Mantelfläche des Gewichtskörpers, gemäß einem exemplarischen Ausführungsbeispiel der vorliegenden Erfindung.
Fig. 8 zeigt ein Echodiagramm, welches mit einer Sondenvorrichtung aus Fig. 4, Fig. 5, Fig. 6 aufgenommen wurde, gemäß einem exemplarischen Ausführungsbeispiel der vorliegenden Erfindung.
Fig. 9 zeigt ein Echodiagramm, welches mit einer Sondenvorrichtung aus Fig. 4, Fig. 5, Fig. 6 aufgenommen wurde, bei einer Trennschichtmessung, gemäß einem exemplarischen Ausführungsbeispiel der vorliegenden Erfindung.
Die Fig. 10 zeigt ein Echodiagramm einer Trennschichtmessung mit einem unterhalb einer Detektionsschwelle liegenden Störecho, gemäß einem exemplarischen Ausführungsbeispiel der vorliegenden Erfindung.
Fig. 11 zeigt ein Echodiagramm mit einer Vergleichsmessung von Echos zwischen einer Sonde mit einem zylinderförmigen Straffgewicht und mit einer Gewichtsvorrichtung gemäß einem exemplarischen Ausführungsbeispiel der vorliegenden Erfindung.
Fig. 12 zeigt ein Flussdiagramm für ein Verfahren zum Herstellen einer Gewichtsvorrichtung, gemäß einem exemplarischen Ausführungsbeispiel der vorliegenden Erfindung.

### Detaillierte Beschreibung von Ausführungsbeispielen

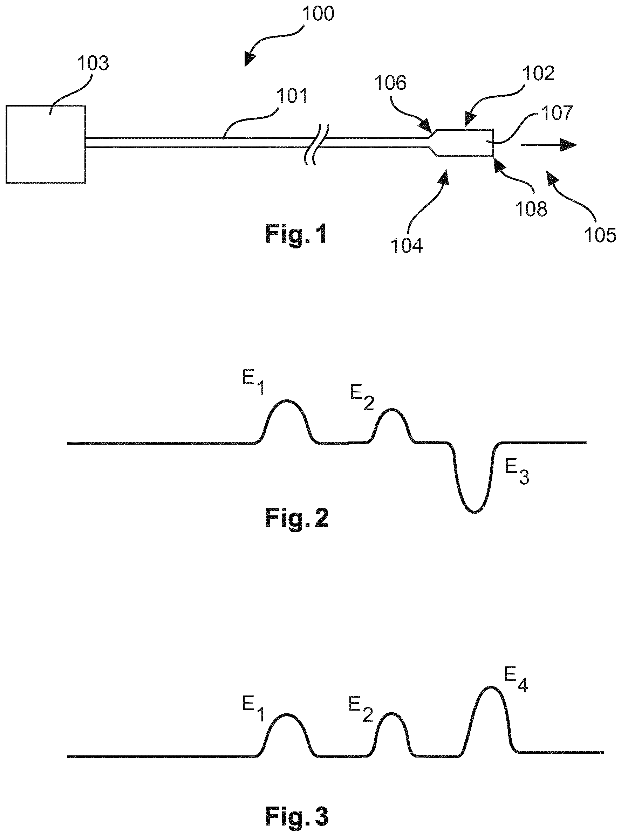

Die Darstellungen in den Figuren sind schematisch und nicht maßstäblich. In der folgenden Beschreibung der Fig. 1 bis Fig. 12 werden die gleichen Bezugszeichen für gleiche oder sich entsprechende Elemente verwendet.

Die Fig. 1 zeigt eine Sondenvorrichtung 100, welche einen Wellenleiter 101 und eine Gewichtsvorrichtung 102 in Form eines Straffgewichts 102 aufweist, zum besseren Verständnis der vorliegenden Erfindung. Der Wellenleiter 101 ist als Seil 101 oder Drahtseil 101 ausgebildet. Fig. 1 zeigt eine Messanordnung bestehend aus einem TDR Sensor 103 und der Sondenvorrichtung 100. Der TDR Sensor 103 mag als Generator für elektromagnetische, optische, akustische oder thermische Wellen ausgebildet sein. Entsprechend mag die Sondenvorrichtung 100 zum Transport der zugehörigen Wellen ausgebildet sein. Ohne Einschränkung der Allgemeinheit mag angenommen werden, dass der TDR Sensor 103 elektromagnetische Wellen erzeugt, welche sich entlang des Seils 101 in Richtung des Straffgewichts 102 bewegen. Die elektromagnetischen Wellen können kontinuierliche oder impulsförmige Wellen sein.

In diesem Text mögen die Begriffe Impedanz und Widerstand, insbsondere der Begriff Wellenwiderstand, gleichwertig verwendet werden.

Der TDR Sensor 103 misst auch die entlang der Seilsonde 100 auftretenden und zurückgeworfenen Reflexionen, die insbesondere auch von Unstetigkeitsstellen erzeugt werden. Der TDR Sensor erstellt zum Sichtbarmachen der Reflexionen ein Echodiagramm, in dem die Reflexionen als Echos sichtbar sind. Gewünschte Reflexionen werden durch das Eintauchen der Sondenvorrichtung in ein Füllgut, hervorgerufen, insbesondere durch das Eintauchen des Sondenendes 104. Das Eintauchen in ein Füllgut erzeugt eine Unstetigkeitsstelle aufgrund der Veränderung der Materialeigenschaften, die für die Reflexion im Bereich des Füllstands verantwortlich ist.

Das Sondenende liegt in einem eingebauten Zustand im Wesentlichen dem TDR Sensor 103 gegenüber, beabstandet durch den Wellenleiter 101. Das Eintauchen in ein Füllgut ist in Fig. 1 nicht dargestellt. Fig. 1 zeigt die Sonde 100 oder Sondenvorrichtung 100 in einem leeren Behälter. Der Behälter ist in Fig. 1 ebenfalls nicht dargestellt. Das Sondenende 104 wird durch die in Fig. 1 mittels Pfeil 105 symbolisierte Schwerkraft gestrafft, die auf das Straffgewicht 102 wirkt. Diese Schwerkraft weist in der Regel in Richtung der Erdoberfläche und insbesondere in Richtung eines Bodens eines Füllbehälters.

Bei den TDR Sensoren 103 verwendete Straffgewichte 102 haben nur die Aufgabe, durch ihr Gewicht das Seil 101 möglichst straff und senkrecht hängend zu halten. Die Form des Straffgewichts 102, die in Fig. 1 zylinderförmig mit einem unstetigen raschen Sprung des Durchmessers dargestellt ist, führt dazu, dass es am Beginn 106 des Straffgewichts 102 oder an einem ersten Ende 106 des Straffgewichts 102, in dem Bereich des Übergangs von dem Seil 101 zu dem Straffgewicht 102, insbesondere zu dem Gewichtskörper 107, zu einer starken Reflexion kommt.

Fig. 2 zeigt ein Reflexionsdiagramm oder Echodiagramm, welches mit einer Seilsonde 100 aus Fig. 1 aufgenommen wurde, zum besseren Verständnis der vorliegenden Erfindung. Durch die starke Änderung der Impedanz zwischen dem Seil 101 und dem Gewichtskörper 107 entsteht neben den gewünschten Reflexionen oder den gewünschten Echos E₁ und E₃ ein zusätzliches Echo E₂. Das Echo E₁ ist das Echo eines Füllguts, wenn das Sondenende 104 in dieses Füllgut eingetaucht und von diesem im Wesentlichen bedeckt ist. Das Echo E₃ lässt sich auf die Unstetigkeitsstelle am zweiten Ende 108 des Gewichtskörpers 107 zurückführen. Allgemein erzeugt der Übergang von einem kleinen Widerstand zu einem größeren Widerstand erzeugt ein negatives Echo. Der Übergang von einem großen Widerstand zu einem kleineren Widerstand erzeugt ein positives Echo im Echodiagramm. Durch die Form des Gewichtskörpers, die Einfluss auf den Wellenwiderstand hat, kann somit festgelegt werden, ob ein Ende des Gewichtskörpers als positives oder als negatives Echo im Echodiagramm sichtbar wird. In dem Echodiagramm der Fig. 2 wird ein positives Echo und ein negatives Echo durch die Richtung des Ausschlages unterschieden. E₂ ist ein positives Echo, verursacht durch den Übergang des großen Wellenwiderstand des Wellenleiters zu dem kleinen Widerstand am ersten Ende106 des Gewichts 102. E₃ ist ein negatives Echo wegen des Übergangs von dem kleinen Wellenwiderstand am zweiten Ende 108 zu dem großen Widerstand des umgebenden Materials. Dieser Übergang von dem kleinen Wellenwiderstand zu dem großen Wellenwiderstand führt zu der sprunghaften Widerstandsänderung am zweiten Ende. Von einer Sprunghaften Widerstandsänderung mag gesprochen werden, wenn die Länge, über die sich eine Widerstandsänderung klein gegenüber der Widerstandsänderung ist. Bei der kontinuierlichen Widerstandsänderung zwischen dem ersten Ende und dem zweiten Ende erfolgt die Widerstandsänderung über einen langen Bereich entlang des Gewichtskörpers. Am zweiten Ende erfolgt eine abrupte Widerstandsänderung. Der Wellenwiderstand des zweiten Endes 108 ist kleiner als der Wellenwiderstand des ersten Endes 106. Durch die kontinuierliche Änderung des Widerstandes innerhalb des langen Bereichs vom ersten Ende zum zweiten Ende wird jedoch im Wesentlichen keine Reflexion erzeugt.

Zusätzlich tritt das Echo E₂ auf, welches durch die Übergangsstelle 106, das erste Ende 106 des Gewichtskörpers 107 oder die Befestigungseinrichtung 106 der Gewichtsvorrichtung 102 verursacht wird. Wie der Fig. 2 zu entnehmen ist, ist die Reflexion oder das Echo, welches von der Änderung der Impedanz an der Übergangsstelle 106 erzeugt wird, im Wesentlichen nicht von der Reflexion des Füllguts zu unterscheiden. Insbesondere die Form und Höhe der Echos E₁ und E₂ ist bei Medien oder Füllgütern, die eine ähnlich starke Reflexion verursachen, wie das Straffgewicht selbst nicht leicht möglich. Besonders Signalverarbeitungssystemen kann eine Unterscheidung der einzelnen Reflexionen E₁, E₂ oder der Echos E₁, E₂ schwer fallen. Selbst bei gut reflektierenden Medien, wie z. B. Wasser, zeigt ein leerer Behälter die Reflexion des Straffgewichts, was selbst komplexen Signalverarbeitungsalgorithmen Schwierigkeiten bereiten kann. In anderen Worten mag das bedeuten, dass bei gut reflektierenden Füllgütern wie Wasser ein sehr starkes Echo von der Füllgutoberfläche zu erwarten ist. Das von der Wasseroberfläche verursachte Echo ist erwünscht. Ein Wasserecho weist eine höhere Amplitude E₁ als des Echo E₂ von der Störstelle auf, d.h. von dem Übergang von dem Wellenleiter zum Gewichtskörper. Aufgrund des Befüllens oder Entleerens des Behälters kann es aber dazu kommen, dass sich bei Fehlen des Wasserechos, z.B. wenn sich die Oberfläche des Wassers unterhalb des Strafgewichts befindet, die Signalverarbeitungsalgorithmen fälschlich für Echo E₂ als Füllstandecho entscheiden. Das gleichzeitige Auftreten ähnlicher Echos E₁, E₂ in einem Echodiagramm mag selbst komplexen Signalverarbeitungsalgorithmen Schwierigkeiten bereiten, wenn es darum geht, durch das Auswerten des Echodiagramms das tatsächliche der Füllgutoberfläche zuzuordnende Echo zu ermitteln. Durch die Verwechslung des durch das Füllgut erzeugte Echos E₁ und des durch die Reflexion am Übergang 106 entstehenden Echos E₂ kann es sogar vorkommen, dass ein falscher Füllstand ermittelt wird oder sogar ein Füllstand ermittelt wird, wenn der Behälter leer ist. D. h. es kann vorkommen, dass das durch die Unstetigkeitsstelle 106 verursachte Echo als ein Füllstandecho interpretiert wird, welches nicht vorhanden ist.

Fig. 3 zeigt eine Darstellung einer Echokurve zur Trennschichtmessung, aufgenommen mit der in Fig. 1 dargestellten Seilsonde zum besseren Verständnis der vorliegenden Erfindung.

Die Problematik der Verwechslung der fälschlich erzeugten Echos an der Übergangsstelle 106 kann insbesondere bei einer Trennschichtmessung zu falschen Messergebnissen führen. Bei einer Trennschichtmessung werden geschichtete Füllgüter vermessen, beispielsweise Öl auf Wasser, und die Lage der Trennschicht zwischen den beiden Materialien wird ermittelt. Bei einer Trennschichtmessung ist es das Ziel, neben dem reinen Füllstandecho auch das Echo der Trennschicht zuverlässig zu bestimmen. Bei einer Trennschichtmessung kann oftmals die Reflexion des Straffgewichts 102 nicht von den Reflexionen unterschieden werden, die von den unterschiedlichen Materialien der Trennschicht hervorgerufen werden. Beispielsweise kann die Reflexion des Öls und die Reflexion des Wassers Schwierigkeiten beim Erkennen bereiten. Bei einer Trennschichtmessung mit einer Sonde mit unstetigem Übergang sind, abgesehen von dem Echo des Endes der Sonde, drei Reflexionen E₁, E₂, E₄ vorhanden. E₁ ist das Echo von dem Füllgut. E₂ ist das Echo des ersten Endes 106, d.h. des Übergangsbereichs 106. E₄ ist das Echo der Trennschicht.

Das Vorhandensein der drei Echos E₁, E₂, E₄ kann dazu führen, dass der TDR Sensor 103 eine falsche Entscheidung trifft und einen falschen Füllstand und/oder einen falschen Wert für die Lage der Trennschicht bestimmt. In Fig. 3 ist das Echo des Straffgewichtendes 108 nicht sichtbar. Die Ursache für die Nichtsichtbarkeit des Echos des Straffgewichtendes 108 kann die Tatsache sein, dass dieses Echo durch das Echo E₄ des Füllgutes der Trennschicht, z.B. das Echo der Trennschicht zwischen Öl und Wasser, verdeckt wird. Das Echo E₄ kann in dem Fall der Überdeckung ein Echo von einem gut reflektierenden Füllgut der Trennschicht sein, das sehr stark ausgeprägt ist. Die Echos E₁ und E₂ aus Fig. 2 und Fig. 3 haben die gleiche Ursache, nämlich E₁ resultiert von der weiteren Trennschicht und E₂ von dem ersten Ende 106. Die weitere Trennschicht mag die Trennschicht sein, an der es zum ersten Mal eine Reflexion gibt.

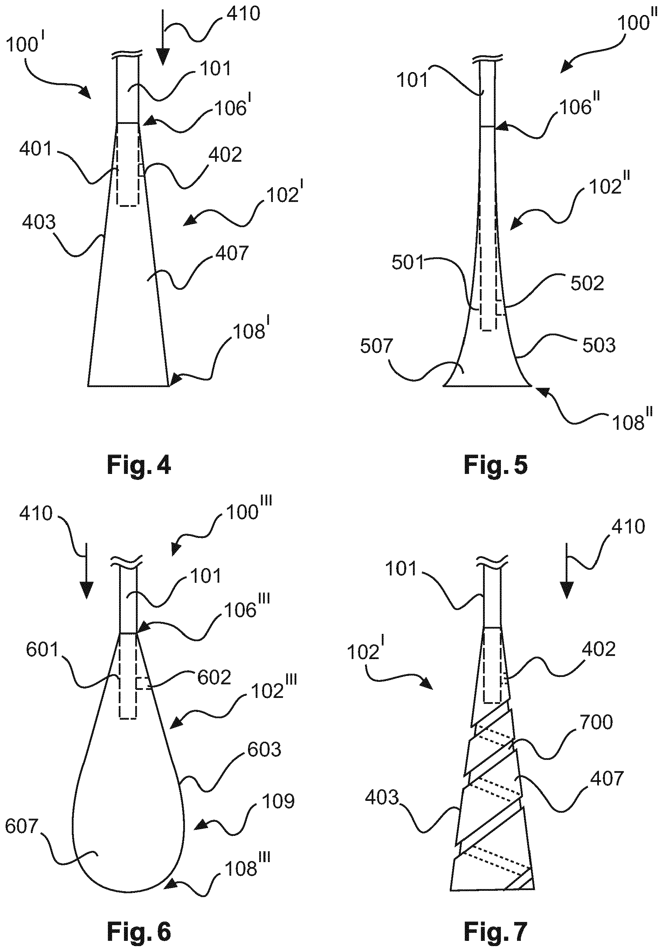

Fig. 4 zeigt eine kegelstumpfförmige Gewichtsvorrichtung gemäß einem exemplarischen Ausführungsbeispiel der vorliegenden Erfindung. In Fig. 4 ist eine Seilsonde 100' zu sehen, welche den Wellenleiter 101 oder das Seil 101 und das Straffgewicht 102' oder die Gewichtsvorrichtung 102' aufweist. Die Gewichtsvorrichtung 102' weist den kegelstumpfförmigen Gewichtskörper 407 auf. Der Gewichtskörper 407 ist als rotationssymmetrischer Vollkörper mit abgeschrägten Seiten 403 dargestellt. Zum Verbinden mit dem Wellenleiter 101 weist der Gewichtskörper 407 das Sackloch 401 mit einer Befestigungsschraube 402 oder mit einer Öffnung für eine Befestigungsschraube auf. Der Durchmesser des Sacklochs 401 entspricht im Wesentlichen dem Durchmesser des Wellenleiters 101, so dass der Wellenleiter in das sackloch einführbar ist. Die Mantelfläche 403 weist einen linear zunehmenden Radius von dem ersten Ende 106' zu dem zweiten Ende 108' auf. Im Bereich des Übergangs von dem seilförmigen Wellenleiter 101 zum Straffgewicht 102' weist der Radius des Kegelstumpfes 407 im Wesentlichen den gleichen Durchmesser wie das Seil 101 auf, abgesehen von einer für das Sackloch benötigten Wandung. Dadurch wird ein im Wesentlichen fließender Übergang, kontinuierlicher Übergang oder sanfter Übergang zwischen dem Wellenleiter 101 und dem Gewichtskörper 407 geschaffen. Das Material des Gewichtskörpers 407 entspricht im Wesentlichen dem für den Wellenleiter 101 eingesetzten Material. In anderen Worten weist die Leitfähigkeit des Wellenleiters 101 denselben Wert auf, wie die Leitfähigkeit des Materials für den Gewichtskörper 407. Durch die Zunahme des Materials in Richtung des zweiten Endes 108' liegt der Schwerpunkt der Gewichtsvorrichtung 102' im unteren Drittel des kegelstumpfförmigen Gewichtskörpers 407, also im Bereich des zweiten Endes 108'.

Eine Signalausbreitungsrichtung ist durch den Pfeil 410 angedeutet und stimmt meist mit der Richtung der Schwerkraft überein. Der Füllbehälter, das Füllgut, in das die Sonde 100' eingetaucht ist, und der TDR Sensor, welcher das Signal 410 generiert und vermisst, ist in Fig. 4 nicht dargestellt. Der Gewichtskörper 407 kann als Vollmaterialkörper oder auch als Hohlkörper ausgebildet sein. Da sich im Wesentlichen eine elektromagnetische Welle, die sich entlang des Seils 101 bewegt, auf der Oberfläche des Seils ausbreitet, wird sie sich auch auf dem kegelstumpfförmigen Gewichtskörper 407 im Wesentlichen auf der abgeschrägten Mantelfläche 403 ausbreiten.

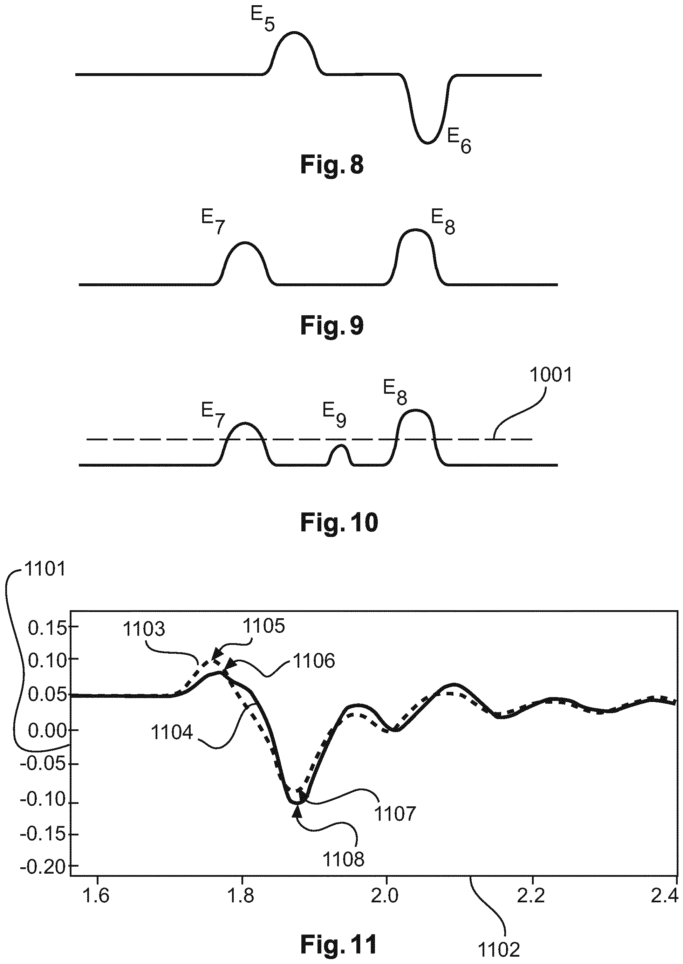

An dem zweiten Ende 108' findet der Übergang entweder zu dem vorhandenen Füllgut, in das der Gewichtskörper 407 eingetaucht ist, oder zu der Luft eines leeren Behälters statt. Dieser Übergang ist abrupt, so dass an dem zweiten Ende 108' eine starke Reflexion erzeugt wird, welche auf einem Reflexionsdiagramm deutlich zu erkennen ist. Ein solches Reflexionsdiagramm ist beispielsweise in Fig. 8 dargestellt. Alternativ zu der Verwendung eines leitfähigen Materials für das Straffgewicht 102' kann auch ein anderes Material eingesetzt werden, welches nur geringe Reflexionseigenschaften oder im Wesentlichen gar keine Reflexionseigenschaften aufweist. In anderen Worten kann anstelle eines leitfähigen Materials für die Gewichtsvorrichtung 102' eine Keramik, ein Glas oder ein Kunststoff verwendet werden.

Es mag ein Aspekt der vorliegenden Erfindung sein, dass die Anpassung der Sonde 100' am Sondenende 106' an den Wellenleiter 101 durch die Optimierung der geometrischen oder mechanischen Form des Straffgewichts 102' erfolgt, womit eine Reduzierung von störenden Reflexionen erreicht werden kann.

Die Impedanzanpassung oder die Impedanzoptimierung an dem Übergang 106' des Wellenleiters 101 zu dem Gewichtskörper 407 mag durch die äußere Formgebung des Straffgewichts 102' erreicht werden, insbesondere durch die Formgebung einer Befestigungseinrichtung im Bereich des ersten Endes 106'. Die von der Übergangsstelle 106' hervorgerufenen Störreflexionen mögen durch die bessere Anpassung reduziert bzw. eliminiert werden. Durch die Verringerung der Reflexionen mag die Energieausbreitung über die Übergangsstelle 106' hinweg erhöht werden, was zu einer Amplitudenerhöhung der Reflexion am Sondenende 108' führt. Diese Amplitudenerhöhung erlaubt es das Sondenende 108' in einem Echodiagramm gut zu erkennen.

Fig. 5 zeigt eine weitere Gewichtsvorrichtung gemäß einem exemplarischen Ausführungsbeispiel der vorliegenden Erfindung. Bei der in Fig. 5 verwendeten Form für das Straffgewicht 102" handelt es sich um eine Trompetenform, deren Mantelfläche 503 einen im Wesentlichen exponentiellen oder parabelförmigen Verlauf aufweist. Die Gewichtsvorrichtung 102" weist den trompetenförmigen Gewichtskörper 507 auf, der ebenfalls ein rotationssymmetrischer Körper ist und entweder als Vollkörper oder als Hohlkörper ausgebildet ist. Sämtliche der beschriebenen Gewichtskörper können auch elektrische Leiter sein, die um einen dielektrischen Körper gewickelt sind. Zusammen mit dem Wellenleiter 101 formt die Gewichtsvorrichtung 102' eine Seilsonde 100", welche ein trompetenförmiges Sondenende 108" aufweist. Der Durchmesser an der Befestigungseinrichtung 106' entspricht im Wesentlichen dem Durchmesser des Wellenleiters 101. Der Wellenleiter 101 ist in dem axial angeordneten Sackloch 501 mittels der Befestigungsschraube 502 fixiert. Das Sackloch 501 in Kombination mit der Befestigungsschraube 502 und/oder einer entsprechenden Öffnung für die Befestigungsschraube bilden eine Befestigungseinrichtung, welche an der Übergangsstelle 106" im Wesentlichen einen an den Wellenleiter 101 angepassten Wellenwiderstand aufweist.

Fig. 6 zeigt eine tropfenförmige Gewichtsvorrichtung, wobei die Tropfenform nicht Teil der Erfindung ist. Die tropfenförmige Gewichtsvorrichtung 102''' weist den tropfenförmigen Gewichtskörper 607 mit der zunächst bezogen auf eine Symmetrieachse in Signalrichtung 410 ansteigenden und dann abfallenden Mantelfläche 603 auf. Das Volumen nimmt also in Signalausbreitungsrichtung zunächst stark zu und dann weniger stark. Der Radius des Gewichtskörpers erhöht sich zunächst in Ausbreitungsrichtung und erniedrigt sich dann wieder zum zweiten Ende hin. Auch dieser tropfenförmige Gewichtskörper 102''' weist einen schmalen Übergangsbereich an einem ersten Ende 106''' auf. Der Durchmesser der Befestigungseinrichtung im Bereich des ersten Endes 106''' entspricht im Wesentlichen dem Durchmesser des Wellenleiters 101, mit dem der tropfenförmige Gewichtskörper 607 verbindbar ist. Fig. 6 zeigt die tropfenförmige Gewichtseinrichtung 102''' in einem mit dem Wellenleiter 101 oder mit dem Seil 101 verbundenen Zustand. Als Befestigungseinrichtung sieht die Gewichtsvorrichtung 102''' ebenfalls ein Sackloch 601 vor, in welches das Seil 101 zum Befestigen eingeführt wird und mit der Befestigungsschraube 602 in einer dafür vorgesehenen senkrecht zur Achse des Sacklochs 601 verlaufenden Öffnung fixiert wird. Der Übergangsbereich 106', 106", 106''' kann aufgrund der Nähe zu der Befestigungseinrichtung auch als Befestigungsbereich 106', 106", 106''' bezeichnet werden.

In sämtlichen der in Fig. 4 - Fig. 6 dargestellten Ausführungsformen kann alternativ zu der Befestigungsschraube 602 der Wellenleiter 101 durch Aufpressen, Anschweißen oder Kleben mit dem jeweiligen Gewichtskörper 407. 507, 607 verbunden werden. Die Rotationsachsen der rotationssymmetrischen Gewichtskörper 407, 507, 607 liegen im Wesentlichen in Deckung mit der Symmetrieachse des Seils 101.

Bei dem Seil 101 handelt es sich um einen länglich ausgedehnten Seilkörper mit einem vorgegebenen Durchmesser. Alternativ zu einem Seil 101 kann auch ein Stab oder ein ähnlich länglich ausgebildeter Körper verwendet werden, der es ermöglicht, eine Welle oder ein Signal zu führen. Die Länge eines eingesetzten Wellenleiters 101 bestimmt sich aus der Behälterlänge eines Behälters, in welchen die Seilsonde 100', 100", 100''' eingesetzt werden soll. Die Seile können genormt sein und Längen im Bereich von 30 cm bis 70 m aufweisen. Die Durchmesser der Seile 101 können 2 mm, 4 mm, 7mm oder 8 mm betragen. Somit weisen die Durchmesser der Gewichtsvorrichtungen 102', 102", 102''' an den ersten Enden 106', 106", 106''' ebenfalls Durchmesser von etwa 2 mm, 4 mm, 7 mm oder 8 mm auf. Im Gegensatz zu dem kegelförmigen Gewichtskörper 407 und dem trompetenförmigen Gewichtskörper 507 verjüngt sich der tropfenförmige Gewichtskörper an einem zweiten Ende 108''' wieder, so dass der dickste Bereich in einer Signalausbreitungsrichtung 410 vor dem zweiten Ende 108''' in dem unteren Drittel des Gewichtskörpers 607 im Bereich 109 liegt. Diese Tropfenform führt dazu, dass sowohl die Störung am Beginn des Körpers gering wird und auch eine gute Anpassung am Ende erreicht wird, beispielsweise beim Übergang zu Luft. Eine geringe Anpassung am ersten Ende und ein guter Übergang zu Luft am zweiten Ende kann in speziellen Anwendungen notwendig sein.

Ein Wellenwiderstand der Befestigungsrichtung im Bereich des ersten Endes 106', 106", 106''' weist beispielsweise einen Wellenwiderstand von 50 Ω oder 377 Ω auf. Der Wellenleiter 101 und somit auch die Fortführung des Wellenleiters in Form des jeweiligen Gewichtskörpers 407, 507, 607 formen insbesondere den Innenleiter eines gesamten Wellenleiters, dessen Außenleiter die in den Figuren Fig. 4, Fig. 5 und Fig. 6 nicht dargestellte Behälter bilden, in denen die Seilsonden 100', 100", 100''' eingesetzt werden.

Die Fig. 7 zeigt den kegelstumpfförmigen Gewichtskörper der Gewichtsvorrichtung 102' der Fig. 4 mit einem auf der Mantelfläche 403 angeordneten Schlitz. Der an der Mantelfläche 403 angeordnete Schlitz 700 verläuft entlang einer Signalausbreitungsrichtung 410 um den Gewichtskörper 407 herum. Ein solcher Schlitz 700 kann in jeder Mantelfläche 403, 503, 603 einer Gewichtsvorrichtung 102', 102", 102''' vorgesehen sein. Der Schlitz verläuft in Signalausbreitungsrichtung 410 bzw. in Wellenausbreitungsrichtung spiralförmig um den Rotationskörper 407 herum. Auch wenn Fig. 7 nur einen Schlitz in dem kegelstumpfförmigen Gewichtskörper 407 darstellt, kann solch ein Schlitz auch in dem trompetenförmigen Gewichtskörper 503 oder dem tropfenförmigen Gewichtskörper 603 oder jedem anderen Gewichtskörper vorgesehen sein. Der Schlitz sollte so ausgeführt sein, dass kein Füllgut darin hängen und/oder haften bleibt, dies könnte zu zusätzlichen Störungen führen. Beispielsweise mag die Steigung des Schlitzes so ausgeprägt sein, dass ein Füllgut leicht abfließen kann.

Die Befestigungseinrichtungen weisen im Wesentlichen das Sackloch 401, 501, 601 und die Öffnung 402, 502, 602 und die zugehörige Befestigungsschraube auf. In einem Beispiel weist der Wellenleiter 101 einen Wellenwiderstand von 50 Ohm oder 377 Ω auf, so dass im Wesentlichen die Gewichtsvorrichtung 102' im Übergangsbereich der Befestigungseinrichtungen 401, 402, 501, 502, 601, 602 an dem jeweiligen ersten Ende 106', 106", 106''' so ausgeformt wird, dass er dort auch einen Wellenwiderstand von 50 Ω oder 377 Ω aufweist.

Fig. 8 zeigt eine Echokurve aufgenommen mit einer Seilsonde 100', 100", 100''' gemäß einem exemplarischen Ausführungsbeispiel der vorliegenden Erfindung. Durch Verwenden des erfindungsgemäßen Straffgewichts 102', 102", 102''' kann eine gute Anpassung der Impedanz der Befestigungseinrichtung im Bereich eines ersten Endes 106', 106", 106''' zu einer guten Anpassung der Impedanz der Gewichtsvorrichtung 102', 102", 102''' an den jeweiligen Wellenleiter 101 erfolgen. Durch die beim Verwenden dieser Gewichtsform resultierende gute Anpassung der Impedanzen des Wellenleiters 101 und der Gewichtsvorrichtung 102', 102", 102''', insbesondere der Befestigungseinrichtung der Gewichtsvorrichtung 102', 102", 102''', können Reflexionen minimiert werden, die durch das Verbinden des Wellenleiters 101 mit der Gewichtsvorrichtung 102', 102", 102''' hervorgerufen werden. Im Vergleich zu dem Echodiagramm der Fig. 2 zeigt die Fig. 8 lediglich das von einem Füllgut hervorgerufene Echo E₅ und das Echo, das von dem Endbereich 108', 108", 108''' der jeweiligen Gewichtsvorrichtung 102', 102", 102''' hervorgerufen wird. Ein Echo, durch einen unstetigen Impedanzsprung, wie beispielsweise das Echo E₂ in Fig. 2, ist nicht zu erkennen. Es sind also weniger Echos vorhanden, dioe unterschieden werden müssen. Das Echo des Endes 108', 108", 108''' der Seilsonde ist wieder als Negativecho E₆ in dem Echodiagramm zu sehen. In anderen Worten mag durch die Anpassung der Impedanz oder des Wellenwiderstands der Befestigungseinrichtung der Gewichtsvorrichtungen 102', 102", 102''' an den Wellenwiderstand des Wellenleiters 101 ein Echo verschwinden, das sonst durch den Verbindungsbereich 106', 106", 106''' und durch die wegen dem Verbindungsbereich 106', 106", 106''' entstehende Impedanzänderung hervorgerufen würde. Zumindest mag das von dem Verbindungsbereich 106', 106", 106''' hervorgerufene Echo so klein sein, dass es unterhalb einer Detektionsschwelle des Sensors 103 liegt. Somit wird dieses ungewünschte Echo so verringert, dass es von einem Detektor im Wesentlichen nicht mehr erkannt wird. Folglich kann die Gefahr einer Verwechslung des unerwünschten Echos mit den zu detektierenden Echos E₅ und E₆ gering gehalten werden. Das unerwünschte Echo ist daher in Fig. 8 nicht eingezeichnet. Für einen Detektor ist somit eine Störung durch ein ungewünschtes Echo nicht wahrnehmbar.

Fig. 9 zeigt eine Echokurve einer Trennschichtmessung mit einer Sonde, die eine angepasste Gewichtsvorrichtung aufweist gemäß einem exemplarischen Ausführungsbeispiel der vorliegenden Erfindung. Das Negativecho des Sondenendes 108', 108", 108''' ist in Fig. 8 oder Fig. 9 nicht dargestellt. Fig. 9 zeigt lediglich ein Echo E₇, welches von einer ersten Trennschicht, beispielsweise Öl, und ein zweites Echo E₈, welches von einer zweiten Trennschicht, beispielsweise Wasser, hervorgerufen wird.

Da in den Fällen der Fig. 8 und Fig. 9 im Wesentlichen kein Störecho mehr sichtbar ist, das durch die Befestigungseinrichtung einer Gewichtsvorrichtung 102', 102", 102''' hervorgerufen wird, können von einer Signalverarbeitung, welche die jeweiligen Echokurven oder Reflexionsdiagramme auswertet, die unterschiedlichen Reflexionen E₅, E₆ oder E₇, E₈ gut voneinander unterscheiden werden. Das gute Unterscheiden der gewünschten Echos kann die Zuverlässigkeit der Messwerte und somit die Zuverlässigkeit von Füllstandmessgeräten bei der Bestimmung des Füllstands erhöhen.

Die Fig. 10 zeigt eine Echokurve einer Trennschichtmessung mit einem unterhalb einer Detektionsschwelle liegenden Störecho gemäß einem exemplarischen Ausführungsbeispiel der vorliegenden Erfindung. Wieder ist, wie in Fig. 9, eine Trennschichtmessung durchgeführt worden, bei der die Echos E₇ und E₈ von den unterschiedlichen Trennschichten herrühren. Das Echo E₉, welches von einer Befestigungseinrichtung an einem ersten Ende 106', 106", 106''' einer Gewichtsvorrichtung 102', 102", 102''' hervorgerufen wird, wird von einem Sensor nicht berücksichtigt, da es unterhalb einer Detektionsschwelle 1001 eines TDR-Sensors liegt.

Durch die Reduzierung der Reflexionen in dem Übergangsbereich 106', 106", 106''' gelangt mehr Energie zu dem jeweiligen Sondenende 108', 108", 108'''. Diese erhöhte Energiemenge wird durch die schlechte Anpassung des zweiten Endes 108', 108", 108''' an die Umgebung, beispielsweise an Luft oder an das Füllgut, zu stärkeren Reflexionen, also zu einem deutlich ausgeprägteren negativen Echo E₆ führen.

Diese Verstärkung eines Echos am Sondenende 108', 108", 108''' mag auch dabei helfen, ein gutes Messergebnis herbeizuführen, da sich auch eine zuverlässige Detektion des Sondenendes bewirken lässt. Eine zuverlässige Detektion des Sondenendes wiederum kann das Zuordnen der übrigen Echos E₅, E₇, E₈ zu den jeweiligen Füllständen oder Trennschichten erleichtern. Es kann auch indirekt, bei Kenntnis der Länge der Sonde 100', 100", 100''', also der Länge des Wellenleiters 101 mit dem Sondenkörper 407, 507, 607 und den Eigenschaften eines umgebenden Mediums, beispielsweise der Dielektrizitätszahl, gut auf den Füllstand geschlossen werden. Eine gute Detektion des Sondenendes 108', 108", 108''' kann auch eine gute Sondenendenvermessung oder EOP (End of Probe) Messung ermöglichen.

Durch das Vorsehen entsprechend breiter Sondenenden 108', 108", 108''' kann ein geringes Gewicht, welches durch den schmalen Durchmesser im Bereich des ersten Endes 106', 106", 106''' zum Anpassen der Wellenwiderstände vorgesehen ist, ausgeglichen werden, so dass das Gewicht einer erfindungsgemäßen Gewichtsvorrichtung 102', 102", 102''' dem Gewicht eines zylindrischen Gewichtskörpers 107 im Wesentlichen entspricht, wodurch die Straffung des Wellenleiters 101 gewährleistet ist.

Fig. 11 zeigt ein Echodiagramm mit einer Vergleichsmessung von Echos zwischen einer Sonde mit einem zylinderförmigen Straffgewicht und einer Sonde mit einer Gewichtsvorrichtung gemäß einem exemplarischen Ausführungsbeispiel der vorliegenden Erfindung. Das Echodiagramm weist eine Ordinate 1101 auf, an der Amplitudenwerte der Reflexionsmessung in Volt eingetragen sind. Der gezeigte Bereich verläuft von - 0,2 V bis + 0,15 V. Die Einteilung der Ordinate 1101 ist in 0,05 V-Schritten. Die Abszisse 1102 stellt die Distanz zu einem Referenzpuls dar, der als normierte Größe für den Beginn einer Messung verwendet wird. Die Einteilung der Ordinate ist in der Einheit m (Meter) und reicht von 1,6 m bis 2,4 m in Schritten von 0,2 m. Gezeigt sind die Kurven 1103, die den Reflexionsverlauf einer Seilsonde mit einem zylindrischen Straffgewicht 102 darstellen und die Reflexionskurve 1104, welche einen Reflexionsverlauf einer Echomessung mit dem kegelstumpfförmigen Straffgewicht 102' aus Fig. 4 zeigt. Es ist zu sehen, dass die Reflexion, die durch den Übergangsbereich hervorgerufen wird, im Falle des zylindrischen Straffgewichts 1105 stärker ausgeprägt ist, als bei Einsatz des kegelstumpfförmigen Straffgewichts 1106. Die Trompetenform oder Tropfenform führt zu ähnlichen Ergebnissen. Die Reflexion an dem Übergangsbereich 106', 106", 106''' an der Stelle 1106 sind gegenüber den Reflexionen 1105 des zylindrischen Straffgewichts abgeschwächt und führen somit zu geringeren Störungen.

In der Fig. 11 ist außerdem zu sehen, dass die Reflexion 1107 an dem Sondenende eines zylindrischen Straffgewichts geringer ist, als die Reflexion 1108 eines Sondenendes 108', 108", 108''' bei Verwendung des kegelstumpfförmigen Straffgewichts 102' oder eines trompetenförmigen Straffgewichts 102" oder eines tropfenförmigen Straffgewichts 102'''. Durch den Austausch des zylindrischen durch ein kegelstumpfförmiges Straffgewicht kann die Amplitude der Störreflexion 1105, 1106 des Straffgewichts 102, 102' von ca. 105mV auf 85 mV reduziert werden, also um ca. 20%. Die Fig. 11 zeigt eine Messung in einem leeren Behälter.

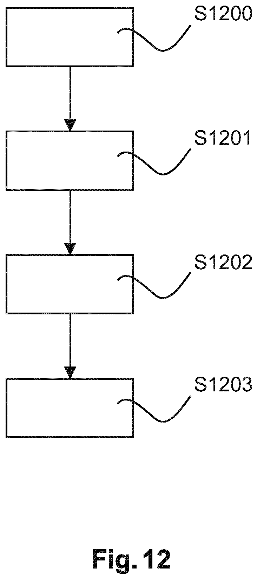

Die Fig. 12 zeigt ein Flussdiagramm für ein Verfahren zum Herstellen der Gewichtsvorrichtung, wobei in einem ersten Verfahrensschritt S1200 ein Wellenleiter 101 mit einer Gewichtsvorrichtung 102', 102", 102''' mittels der Verbindungseinrichtung am ersten Ende 106', 106", 106''' verbunden wird. In dem Schritt S1201 wird eine Welle, beispielsweise eine elektromagnetische Welle oder eine akustische Welle, in den Wellenleiter 101 in Richtung des Gewichtskörpers 407, 503, 603 eingeprägt, so dass sie sich in der Richtung zum Sondenende 108', 108", 108''' ausbreitet, wie durch Pfeil 410 beispielsweise angedeutet ist. Es erfolgt in Schritt S1202 ein Messen der Reflexion, die durch die Befestigungseinrichtung 401, 402, 501, 502, 601, 602 und insbesondere von dem ersten Ende 106', 106", 106''' hervorgerufen wird. Diese Reflexion macht sich beispielsweise als ein Echo E₉ bemerkbar. In Schritt S1203 erfolgt dann eine Veränderung der Form der Gewichtsvorrichtung 102', 102", 102''' oder des Gewichtskörpers 407, 507, 607, insbesondere des ersten Endes 106', 106", 106''' im Bereich der Befestigungseinrichtung 401, 402, 501, 502, 601, 602. Durch das Verändern der Form wird die Reflexion solange minimiert, bis sie im Wesentlichen Verschwindet oder unterhalb einer Detektionsschwelle 1001 eines Sensors zu liegen kommt.

## Patentansprüche

1. Gewichtsvorrichtung (102', 102", 102''') für ein Füllstandsmessgerät mit einem Wellenleiter (101) in Form eines Seils mit einem Wellenwiderstand, wobei die Gewichtsvorrichtung weiter (102', 102", 102''') aufweist:
einen Gewichtskörper (407, 507, 607) mit einer Befestigungseinrichtung;
wobei die Befestigungseinrichtung zum Befestigen des Gewichtskörpers (407, 507, 607) an dem Wellenleiter eingerichtet ist;
wobei die Befestigungseinrichtung einen Wellenwiderstand aufweist der im Wesentlichen an den Wellenwiderstand des Wellenleiters angepasst ist;
wobei die Befestigungseinrichtung ein Übergangsbereich ist, in dem ein Übergang von dem Wellenleiter (101) zu der Gewichtsvorrichtung (102', 102", 102''') stattfindet, und wobei die Befestigungseinrichtung so beschaffen ist, dass sie in einem befestigten Zustand ein Ende des Seils sicher fixiert, jedoch nur geringe Reflektionen verursacht;
**dadurch gekennzeichnet, dass** der Gewichtskörper (407, 507, 607) eine Form aufweist, die aus der Gruppe von Formen ausgewählt ist, bestehend aus:
- einer Kegelstumpfform und
- einer Trompetenform.

2. Gewichtsvorrichtung (102', 102", 102''') nach Anspruch 1, wobei die Befestigungseinrichtung an einem ersten Ende (106', 106", 106''') der Gewichtsvorrichtung (102', 102", 102''') angeordnet ist, die einem zweiten Ende (108', 108", 108''') der Gewichtsvorrichtung (102', 102", 102''') gegenüber liegt;
wobei das zweite Ende (108', 108", 108''') einen Wellenwiderstand aufweist, der kleiner als der Wellenwiderstand der Befestigungseinrichtung ist.

3. Gewichtsvorrichtung (102', 102", 102"') nach Anspruch 1 oder 2, wobei der Gewichtskörper (407, 507, 607) zumindest teilweise aus einem Material hergestellt ist, das auf das Material des Wellenleiters abgestimmt ist.

4. Gewichtsvorrichtung (102', 102", 102''') nach einem der Ansprüche 1 bis 3, wobei die Befestigungseinrichtung mit einem Seilende verbindbar ist.

5. Gewichtsvorrichtung (102', 102", 102''') nach einem der Ansprüche 1 bis 4, wobei die Befestigungseinrichtung eine Öffnung (402, 502, 602) mit einer Befestigungsschraube aufweist.

6. Gewichtsvorrichtung (102', 102", 102''') nach einem der Ansprüche 1 bis 5, wobei der Gewichtskörper (407, 507, 607) ein rotationssymmetrischer dreidimensionaler Körper ist.

7. Gewichtsvorrichtung (102', 102", 102''') nach einem der Ansprüche 2 bis 6, wobei der Gewichtskörper (407, 507, 607) einen Durchmesser aufweist, der in der Richtung vom ersten Ende (106', 106", 106''') zum zweiten Ende (108', 108", 108''') im Wesentlichen zunimmt.

8. Gewichtsvorrichtung (102', 102", 102''') nach einem der Ansprüche 1 bis 7, wobei die Mantelfläche (403, 503, 603) des Gewichtskörpers (407, 507, 607) zumindest einen Schlitz (700) aufweist.

9. Verfahren zum Herstellen einer Gewichtsvorrichtung nach einem der Ansprüche 1 bis 8, aufweisend;
Verbinden des Gewichtskörpers der Gewichtsvorrichtung mit dem Wellenleiter der Gewichtsvorrichtung;
Einprägen einer Welle in den Wellenleiter;
Messen einer Reflexion verursacht durch die Befestigungseinrichtung der Gewichtsvorrichtung;
Verändern der Form der Gewichtsvorrichtung und dabei Minimieren der Reflexion.

10. Füllstandmessgerät, aufweisend eine Gewichtsvorrichtung 108', 108", 108''') nach einem der Ansprüche 1 bis 8.

## Claims

1. Weight device (102', 102", 102''') for a level measuring instrument comprising a waveguide (101) of a shape of a cable having a wave resistance, the weight device (102', 102", 102''') further comprising:
a weight body (407, 507, 607) having a fixing means;
wherein the fixing means is set up to fix the weight body (407, 507, 607) to the waveguide;
wherein the fixing means comprises a wave resistance which is substantially adapted to the wave resistance of the waveguide;
wherein the fixing means is a transition area in which a transition from the waveguide (101) to the weight device (102', 102", 102''') takes place, and wherein the fixing means is designed such that, in a fixing state, the fixing means fixes an end of the cable, but only causes minor reflections;
**characterized in that** the weight body (407, 507, 607) is of a shape selected from the group of shapes, consisting of:
- a truncated cone shape
- a trumpet shape.

2. Weight device (102', 102", 102''') according to claim 1, wherein the fixing means is arranged at a first end (106', 106", 106''') of the weight device (102', 102", 102''') which is opposite a second end (108', 108", 108''') of the weight device (102', 102", 102''');
wherein the second end (108', 108", 108''') comprises a wave resistance which is less than the wave resistance of the fixing means.

3. Weight device (102', 102", 102''') according to claim 1 or 2, wherein the weight body (407, 507, 607) is manufactured at least in part from a material which is matched to the material of the waveguide.

4. Weight device (102', 102", 102''') according to any of claims 1 to 3,
wherein the fixing means can be connected to a cable end.

5. Weight device (102', 102", 102''') according to any of claims 1 to 4, wherein the fixing means comprises an opening (402, 502, 602) having a fixing screw.

6. Weight device (102', 102", 102''') according to any of claims 1 to 5, wherein the weight body (407, 507, 607) is a rotationally symmetrical three-dimensional body.

7. Weight device (102', 102", 102''') according to any of claims 2 to 6, wherein the weight body (407, 507, 607) has a diameter which increases substantially in the direction from the first end (106', 106", 106''') to the second end (108', 108", 108''').

8. Weight device (102', 102", 102''') according to any of claims 1 to 7, wherein the outer surface (403, 503, 603) of the weight body (407, 507, 607) comprises at least one slit (700).

9. Method for manufacturing a weight device according to any of claims 1 to 8, comprising:
connecting the weight device of the weight device to the waveguide of the weight device;
impressing a wave into the waveguide;
measuring a reflection caused by the fixing means of the weight device;
changing the shape of the weight device and thus minimising the reflection.

10. Level measuring instrument comprising a weight device (108', 108", 108''') according to any of claims 1 to 8.

## Revendications

1. Dispositif de masselotte (102', 102", 102''') pour un appareil de mesure de niveau de remplissage comportant un guide d'ondes (101) se présentant sous la forme d'un câble ayant une impédance caractéristique, dans lequel le dispositif de masselotte (102', 102", 102''') comporte en outre :
un corps de masselotte (407, 507, 607) ayant un dispositif de fixation,
dans lequel le dispositif de fixation est adapté pour fixer le corps de masselotte (407, 507, 607) sur le guide d'ondes,
dans lequel le dispositif de fixation a une impédance caractéristique qui est sensiblement ajustée à l'impédance caractéristique du guide d'ondes,
dans lequel le dispositif de fixation est une zone de jonction dans laquelle se trouve une jonction du guide d'ondes (101) au dispositif de masselotte (102', 102", 102'''), et dans lequel le dispositif de fixation est conçu de sorte qu'il fixe de manière sûre une extrémité du câble dans un état fixé, mais n'entraîne que de faibles réflexions,
**caractérisé en ce que** le corps de masselotte (407, 507, 607) a une forme qui est choisie parmi le groupe de formes constitué de :
- une forme de tronc de cône et
- une forme de trompette.

2. Dispositif de masselotte (102', 102", 102''') selon la revendication 1, dans lequel le dispositif de fixation est agencé à une première extrémité (106', 106", 106''') du dispositif de masselotte (102', 102", 102''') qui est à l'opposé d'une seconde extrémité (108', 108", 108''') du dispositif de masselotte (102', 102", 102'''),
dans lequel la seconde extrémité (108', 108", 108''') a une impédance caractéristique qui est inférieure à l'impédance caractéristique du dispositif de fixation.

3. Dispositif de masselotte (102', 102", 102"') selon la revendication 1 ou 2, dans lequel le corps de masselotte (407, 507, 607) est fabriqué au moins en partie à partir d'un matériau qui est adapté au matériau du guide d'ondes.

4. Dispositif de masselotte (102', 102", 102''') selon l'une des revendications 1 à 3, dans lequel le dispositif de fixation peut être relié à une extrémité de câble.

5. Dispositif de masselotte (102', 102", 102''') selon l'une des revendications 1 à 4, dans lequel le dispositif de fixation comporte une ouverture (402, 502, 602) munie d'une vis de fixation.

6. Dispositif de masselotte (102', 102", 102''') selon l'une des revendications 1 à 5, dans lequel le corps de masselotte (407, 507, 607) est un corps tridimensionnel symétrique par rotation.

7. Dispositif de masselotte (102', 102", 102''') selon l'une des revendications 2 à 6, dans lequel le corps de masselotte (407, 507, 607) a un diamètre qui augmente sensiblement dans la direction de la première extrémité (106', 106", 106"') à la seconde extrémité (108', 108", 108''').

8. Dispositif de masselotte (102', 102", 102''') selon l'une des revendications 1 à 7, dans lequel la surface d'enveloppe (403, 503, 603) du corps de masselotte (407, 507, 607) comporte au moins une fente (700).

9. Procédé pour fabriquer un dispositif de masselotte selon l'une des revendications 1 à 8, comportant les étapes consistant à :
assembler le corps de masselotte du dispositif de masselotte au guide d'ondes du dispositif de masselotte,
induire une onde dans le guide d'ondes,
mesurer une réflexion provoquée par le dispositif de fixation du dispositif de masselotte,
modifier la forme du dispositif de masselotte et minimiser ainsi la réflexion.

10. Appareil de mesure de niveau de remplissage comportant un dispositif de masselotte (108', 108", 108''') selon l'une des revendications 1 à 8.
